# EUROPEAN PATENT APPLICATION

(11) **EP 2 540 584 A2**
(43) Date of publication of application: **02.01.2013**
(21) Application number: 12152256.9
(22) Date of filing: 24.01.2012
(51) Int. Cl.: B60S 1/50, B60S 5/02

(54) **Automatic Production and Dispensing Device for Windscreen Washer Fluid**

(30) Priority: 29.06.2011 RO 201100027
(71) Applicant: Voicu, Ionel, 050654 Bucharest (RO); Voicu, Mihai-Sergiu, 050654 Bucharest (RO)
(72) Inventor: Voicu, Ionel, 050654 Bucharest (RO)

(57) **Abstract**

The invention is about a device that has the purpose to prepare a windscreen washer fluid, which is obtained by specifically dosing a concentrated solution (stored in one or multiple containers) and mixing it with water from the local network in a tank, as well as delivering the newly obtained windscreen washer fluid into the vehicles' washer reservoirs by using special nozzles. It has the possibility to measure and display, in real time, the amount of windscreen washer that was delivered through an electronic software system.

The windscreen washer dispenser is made from a casing **A,** in which there is the following assembly: one or more concentrated solution containers **1** connected through dosing circuits (which contains dosing pumps **2** with drain sensors) to the mixing reservoir **5,** a water supply circuit (which contains a filtering element **3** and a solenoid valve **4**), also connected to the mixing reservoir **5** (which contains level sensors (not shown) that operate the solenoid valves **4** and **6** through the electronic software system (not shown)), a buffer reservoir **7** and one or more delivery circuits (which contains a pump **8,** a hose with nozzle **11** and a nozzle sensor **12**). Each delivery circuit includes a solenoid valve **10,** a pulse-meter **9** and a display **13** controlled by the electronic software system.

## Description

The invention is about a device that has the purpose to prepare a windscreen washer fluid, which is obtained by specifically dosing a concentrated solution (stored in one or multiple containers) and mixing it with water from the local network in a tank, as well as delivering the newly obtained windscreen washer into the vehicles' washer reservoirs by using special nozzles. It has the possibility to measure and display, in real time, the amount of windscreen washer that was delivered through an electronic software system.

This device is designed to be used in high traffic areas such as gas stations, car parks, etc.

The classic procedure of filling a car's washer reservoir is to pour a ready made solution into it. This solution is packed either in a plastic bottle or in a plastic bag.

The above mentioned procedure has the following interconnected drawbacks: transport of large quantities of windscreen washer from the manufacturer to the distributor. This leads to increased transport and storage costs, large consumptions of plastic packing materials and in the end a high price the client has to pay for the product. Another drawback is the trunk space occupied by the plastic packaging, as well as the annoying noise it generates when the vehicle is driven.

According to this invention, the device removes the above mentioned drawbacks by preparing the windscreen washer, on sight, at a default dilution (depending on season). It delivers the obtained solution to vehicles, without using any intermediate storage containers. The device has the possibility to count and display both the delivered volume and the amount of payment.

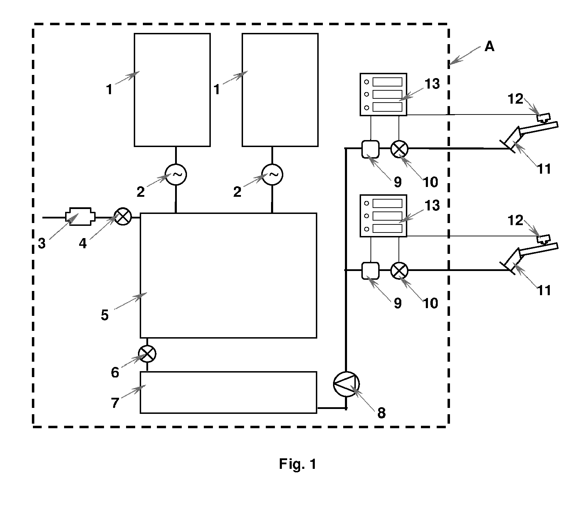

The object of the invention is shown in the picture, where **Fig. 1** shows the schematic diagram of such a device with two nozzles.

According to this invention, the windscreen washer dispenser is made from a casing **A,** in which there is the following assembly: one or more concentrated solution containers **1** connected through dosing circuits (which contains dosing pumps **2** with drain sensors) to the mixing reservoir **5,** a water supply circuit (which contains a filtering element **3** and a solenoid valve **4**), also connected to the mixing reservoir **5** (which contains level sensors (not shown) that operate the solenoid valves **4** and **6** through the electronic software system (not shown)), a buffer reservoir **7** and one or more delivery circuits (which contains a pump **8,** a hose with nozzle **11** and a nozzle sensor **12**). Each delivery circuit includes a solenoid valve **10,** a pulse-meter **9** and a display **13** controlled by the electronic software system.

How the device works:
a) in order to obtain the washer fluid, introduce one or more concentrated solution containers **1** in the special designated place inside the casing **A,** and connect it/them to the dosing circuits. When the mixing reservoir **5** is empty the level sensor (not shown) closes the solenoid valve **6,** opens the solenoid valve **4** which operates the water supply circuit and starts the dosing pump **2** in order to release the default amount of concentrated solution. When the mixing reservoir **5** is full and the washer fluid is obtained, the level sensor (not shown) closes the solenoid valve **4** and opens the solenoid valve **6,** in order to transfer it into the buffer reservoir **7.** When the mixing reservoir **5** is empty the preparation cycle is automatically repeated in order to obtain a new quantity of windscreen washer. When one of the concentrated solution containers **1** is empty, the drain sensor automatically switches off the dosing circuit and starts another one that has a full container.
b) in order to deliver windscreen washer from the buffer reservoir 7 into the cars' washer reservoir, release one of the nozzles **11** from its support. This way the nozzle sensor **12** starts the pump **8** and opens the solenoid valve **10.** The electronic software system counts the pulses for the pulse-meter **9,** showing the delivered amount of windscreen washer and the amount of payment on the display **13** and sends the information to the payment system. When the delivery of the windscreen washer is done place the nozzle back in its support. This way the nozzle sensor **12** closes the solenoid valve **10** and also stops the pump **8** unless another nozzle is in use. The solenoid valve **10** reopens only after the confirmation from the payment system was received.

## Claims

1. A windscreen washer dispenser prepares a windscreen washer fluid, by specifically dosing a concentrated solution (stored in one or multiple containers) and mixing it with water from the local network in a mixing reservoir, stores the obtained fluid in a buffer reservoir and delivers it to one or more vehicles through one or more delivery circuits.

2. A windscreen washer dispenser, according to claim 1, wherein all its components automatically operate through an electronic software system which is an integrated part of the assembly.

3. A windscreen washer dispenser, according to claims 1 and 2, wherein automatically and successively prepares a windscreen washer fluid in the mixing reservoir by a using level sensor.

4. A windscreen washer dispenser, according to claims 1, 2 and 3, wherein the drain sensors signal the emptying of a concentrated solution container and automatically switch to the next full one without any interruptions in the production cycle.

5. A windscreen washer dispenser, according to claims 1 and 2, wherein each of the delivery circuits can operate simultaneously.

6. A windscreen washer dispenser, according to claims 1 and 5, wherein each delivery circuits has its own pulse-meter and display in order show both the delivered volume and the amount of payment.
